# EUROPEAN PATENT SPECIFICATION

(11) **EP 3 306 002 B1**
(45) Date of publication and mention of the grant of the patent: **15.05.2019**
(21) Application number: 17194391.3
(22) Date of filing: 02.10.2017
(51) Int. Cl.: E04B 1/76, E04B 1/90, E04F 13/08, B32B 1/00

(54) **HYBRID INSULATING BOARD FOR CAVITY WALLS**
HYBRIDE ISOLIERPLATTE FÜR HOHLWÄNDE
PANNEAU ISOLANT HYBRIDE POUR PAROIS DE CAVITÉ

(30) Priority: 05.10.2016 EP 16192416
(43) Date of publication of application: 11.04.2018
(73) Proprietor: Saint-Gobain Isover, 92400 Courbevoie (FR); SAINT-GOBAIN CONSTRUCTION PRODUCTS, Coventry CV3 2TT (GB)
(72) Inventor: MAHONEY, Joe, Colchester, Essex CO40HL (GB); ELFORD, Daniel, Ipswich Suffolk, IP 6BA (GB)
(74) Representative: Saint-Gobain Recherche

(56) References cited:
- EP-A1- 1 826 335
- WO-A1-03/001004
- DE-U1-202005 011 630

## Description

The invention is directed to an insulating board for insulating walls and the like having a surface with unevennesses, said insulating board being suitable in particular for insulating cavity walls of buildings, said board comprising at least one organic foam base layer of insulating material and at least one fiber-based layer. The organic foam base layer and the fiber-based layer are assembled through a bonding layer that leaves a non adhesive-coated margin around the panel at least along one edge of the panel. The invention also relates to a method for insulating walls, wherein said method uses those insulation boards.

Such boards are particularly suitable for insulating cavity walls of buildings, such as dwelling houses, offices, et cetera. Especially, such boards are for insulation walls of limited dimensions between the inner and outer leaf where there is difficulty in aligning the outer leaf, due to the incompressibility of the insulation panel.

### State of the art

It is known from EP 0 952 266, to thermally insulate a wall presenting an uneven inner surface, by providing hybrid insulating boards comprising a stiff base layer of insulating material and an at least locally compressible layer of insulating material provided on the base layer, wherein the insulating board is pressed and secured, against the uneven surface, such that the compressible layer at least partly envelops the unevennesses of the wall. The hybrid board are arranged against the inner leaf with the rigid board exposed towards the inner surface of the outer leaf, and the compressible layer allows for good alignment with the outer surface leaf of the inner leaf, at least partially enveloping the unevenness of the inner leaf.

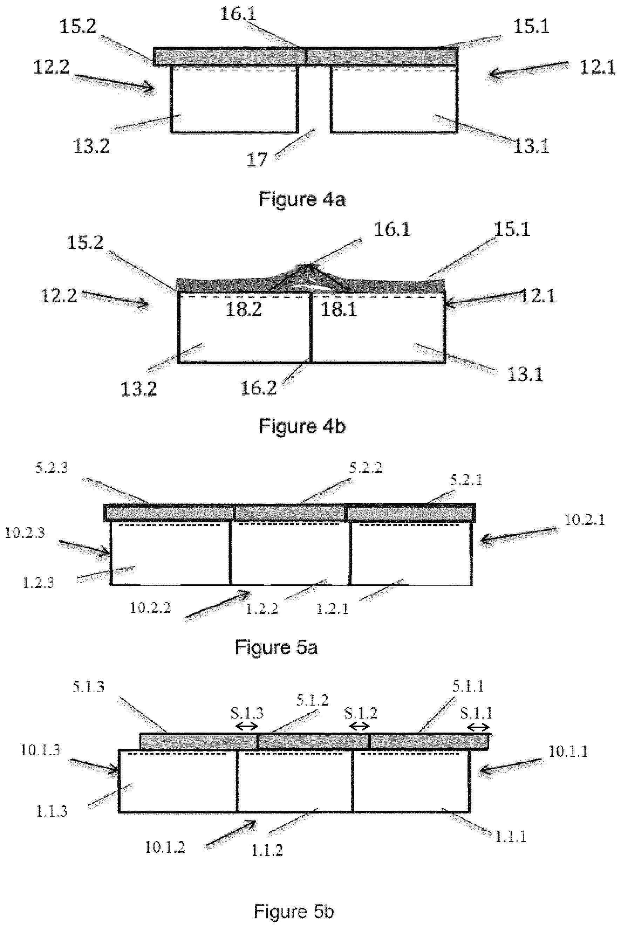

However, at the installation stage, upon assembly of the hybrid boards on a wall, there sometimes appears at the edges of the board, due to variation of sizes of the boards, either some air gaps, like illustrated in figure 4a, or an out of plane deformation, like illustrated in figure 4b. These edges effects are prejudicing moisture and thermal performances of the solution.

When hybrid boards are produced, the stiff base layer and the compressible layer are provided as plates of approximately the same dimensions. However, production of those materials is subject to a tolerance of ±2 or 3 mm of difference in the dimensions of the plates. Therefore, the stiff base layer and the compressible layer can be assembled with an oversize or a shift of dimensions of up to 5 or 6 mm. This shift may result in an excess 5 or 6 mm border of compressible layer material that, when compressed against an abutting board, results into an out-of-plane deformation, difficulties in the alignment to the wall and creating an even layer of insulation. To solve the issue, special process for adapting the panels could be organised at the job site, with more costly operational costs.

Moreover, in some cases a shift between the two layers of a panel is voluntarily organized in order to favour interaction of each board with adjacent boards, and improve insulation and moisture management. A staggered configuration may be provided, realizing a so-called ship lap junction between two boards.

In such a configuration, on account of manufacturing tolerance, the shift between the compressible layer and the stiff layer may not be identical for all boards, and assembling boards that present some mismatching leads to board distortion at the edges and/or air gaps at the junctions.

If lateral compression of the compressible layer is not possible on account of rigid bonding of the stiff base layer to the compressible layer, thermal bridges may appear, moisture performances is degraded, even more as the fiber based insulant can be damaged.

It was an aim of the invention to overcome such limitation of prior art hybrid boards and to provide insulating hybrid boards and an insulating method that obviates the above mentioned drawbacks.

The object of the invention is to provide hybrid boards capable of satisfactory thermal and acoustics performance, as well as satisfactory moisture management, which can be assembled on a wall without generating air gaps or provoking distortion of the board which lower thermal performance and/or moisture management.

The goal of the invention is to improve both thermal and moisture performances of the hybrid solution.

It helps also to reduce the number of process steps, while solving the issue of tolerances between the stiff and compressible layers. The invention provides a cost effective solution.

### Summary of the invention

A first subject matter of the invention relates to an insulating board comprising a stack of layers including:
- an organic foam base layer, and
- a fiber-based layer in contact with the organic foam base layer, thereby defining a contact area, and bonded to the organic foam base layer by means of an adhesive layer coated on one face of the organic foam base layer in said contact area,
wherein the contact area comprises an adhesive-free margin of at least 10 mm width along at least one of its edges.

The organic foam of the organic foam base layer is selected amongst the usual thermally insulating foam materials.

According to a preferred embodiment, the organic foam is selected from polystyrene foam, phenolic foam, polyisocyanurate foam and polyurethane foam, preferably polyisocyanurate foam.

Advantageously the organic foam base layer is rigid or stiff, with the meaning of EN 13165 (Thermal insulation products for buildings - Factory made rigid polyurethane foam (PU) products - Specification) for polyurethane and polyisocyanurate.

Advantageously, the fiber-based layer is deformable laterally, for instance it can be pleated or compressed in a direction transversal to its edges, for instance in a direction or plane perpendicular to the edges, and more preferably it can also be compressed in the thickness direction, for instance it can be compressed preferably to about at least a quarter of its initial thickness. More advantageously it is resiliently compressible across its thickness, meaning that it regains substantially its initial shape after compression is released.

The fiber-based layer is preferably at least a few millimetres thick, typically at least 5 mm.

Suitable fiber-based materials can be chosen from well-known thermally and/or acoustically insulating materials.

According to a preferred embodiment the fiber-based layer includes mineral wool or vegetal wool, made from wood fibers, kenaf, hemp, or similar, or a hybrid material combining mineral and vegetal fibers.

According to an even more preferred embodiment, the mineral wool is stonewool, including stone wool made from natural rocks or slag wool, or glass wool including high temperature resistant glass wool known as the Ultimate products commercialised by Saint-Gobain Isover, and preferably glass wool.

According to a preferred embodiment, the fiber-based layer, preferably the mineral wool layer, is of density equal or less than 50kg/m³, more preferably equal or less than 40kg/m³.

As generally preferred in the invention, the fiber-based layer is a thermally insulating material.

According to a preferred embodiment, the fiber-based layer, preferably the mineral wool layer, is of thermal conductivity equal or less than 35 mW/m.K, and more preferably equal or less than 32 mW/m.K. The principle of the invention equally applies to mineral wool with higher thermal conductivity up to 40 mW/m.K, albeit with less thermal benefit (thermal conductivities are measured according to EN12939).

According to a preferred embodiment, the ratio T1/T2 of the thickness T1 of the organic foam base layer to the thickness T2 of the fiber-based layer, preferably the mineral wool layer, is from 50/50 to 90/10, advantageously from 20/10 to 70/10. This allows taking greater benefit of the thermally insulating power of each layer.

According to a preferred embodiment, the non-adhesive-coated margin of the contact area is located along at least two consecutive edges, i.e. adjacent edges, of the organic foam base layer.

According to an even more preferred embodiment, the non-adhesive-coated margin of the contact area is located along all the edges of the organic foam base layer.

According to a preferred embodiment, the non-adhesive-coated margin of the contact area is of at least 15 mm width. The width of the non-adhesive-coated margin of the contact area should be limited to ensure stability of the glued assembly, and should preferably not exceed 15% of the width of the board.

According to a preferred embodiment, the adhesive layer is non-continuous.

According to another embodiment, the adhesive layer is continuous.

According to a preferred embodiment, the adhesive layer comprises parallel bands of adhesive.

According to a preferred embodiment, the adhesive layer comprises spiral shaped patterns of adhesive.

According to a preferred embodiment, the adhesive layer comprises random shaped patterns of adhesive.

According to a preferred embodiment, the organic foam base layer and the fiber-based layer are stacked with a shift along their length and/or along their width.

By "shift" it is meant that at least one edge of one layer is shifted in position compared to the corresponding edge of the other layer adhered to the first layer. This shift may result in the edge of the first layer extending beyond the edge of the other layer, or the edge of the first layer being located within the perimeter of the other layer. Thus the shift means that the respective edges are not perfectly aligned, yet preferably they are parallel to each other.

In a preferred embodiment, the shift is such that at least two edges, preferably two adjacent edges, of the fibre-based layer extend beyond the edges of the underlying foam layer. In particular the board may have a staggered construction with the full fiber-based layer being offset laterally over the foam layer, from about the same distance in either direction, or the distance may be different for each pair of corresponding edges.

Preferably, the shift is at most 25 mm, preferably at most 20 mm, for instance about 15 mm, and preferably at least 5 mm. The shift preferably represents 5 % or less of the smaller width dimensions of the board, advantageously around 3%. This is low enough to limit overall size of the hybrid board, and packaged volume; a few millimetres are enough to create a lateral overlap and limit thermal and moisture transfer.

According to a preferred embodiment, the thickness (T1) of the organic foam layer is from 10 to 200 mm.

According to a preferred embodiment, the thickness (T2) of the fiber-based layer, preferably the mineral wool layer, is from 10 to 100 mm, preferably from 10 to 50 mm.

According to a preferred embodiment, the adhesive layer consists of a hot melt adhesive layer.

According to a preferred embodiment, the stack of layers comprises gas-impermeable facings on the face of the organic foam base layer opposite to the fiber-based layer.

Another subject matter of the invention is a method for insulating a wall, said method comprising application and attachment to that wall of an insulating board as above disclosed.

According to a preferred embodiment, said method comprises application and attachment of at least two adjacent insulating boards as above disclosed, abuttment against each other of the respective organic foam layers of the adjacent boards, and compression of the excess fiber based layer(s) on the margin of one or both of the board(s).

According to a preferred embodiment, the wall is a cavity wall.

According to an even more preferred embodiment, in cases wherein the wall is a cavity wall comprising an outer wall, typically a brick wall, and an inner wall, typically a concrete wall, the fiber-based layer, preferably the mineral wool layer, is facing the outer wall, preferably in contact with the inner side of the outer wall, for instance made of bricks, the organic foam base layer facing the inner wall, for instance made of concrete blocks.

Another subject matter of the invention is a method of producing an insulating board as above disclosed, said method comprising:
- providing a plate of an organic foam material,
- coating an adhesive layer on one face of the plate, the adhesive leaving a non adhesive-coated margin of at least 10 mm width along at least one of the edges of the plate,
- providing a piece of fiber-based material, preferably mineral wool, of approximately the same dimensions as the dimensions of the organic foam plate,
- laminating the piece of fiber-based material, on the adhesive layer-coated face of the organic foam plate.

According to a preferred embodiment, the organic foam plate and the piece of fiber-based material, preferably mineral wool, are shifted along their length and/or along their width before the fiber based material is laminated onto the organic foam plate, thus the fiber-based layer extends beyond the perimeter of the foam plate along at least one edge of the latter.

### Detailed description

Assembling a rigid layer and a deformable or compressible layer by means of an adhesive layer, leaving an adhesive-free margin in the contact area between the rigid and compressible layer gives the possibility to compress the deformable or compressible layer to make it conform to the contours of a neighbouring board in order to reduce thermal bridges, maintain the thermal resistance value R, increase the barrier against moisture ingression, and avoid air convection. The adhesive-free margin of the contact area provides practicality at the installation stage: it permits overlapping of compressible material in excess on the edges of a first board with the stiff layer of an adjacent board. The size of the adhesive-free margin can be adapted as a function of the compressibility of the compressible material.

"Deformable or compressible layer" designates here a layer of a material the dimensions of which are reduced in one direction when submitted to a compression in the same direction, thereby reducing its total volume. According to the invention, the level of pressure endured by a board is typical of the forces exerted by installation on a job site to have a building element fit in a designated space when handled manually. Advantageously, the layer of compressible material can be submitted to a pressure corresponding to its conditions of use as part of insulating boards without being damaged or destroyed.

By contrast, a rigid or stiff material used according to the invention, would not change size and volume when manipulated by the craftsmen using ordinary force and tools in a job site to fit the board in a designated space, and break or be damaged when submitted to an action beyond a certain limit pressure. The limit pressure that a rigid material can endure depends upon the nature of the material. Typical insulants available in the form of boards belong to the family of rigid insulants (notably polystyrene, phenolic foams, rigid polyurethane or polyisocyanurate) and are not considered a compressible material according to the invention.

« Resiliently compressible layer » designates a layer of a material that is capable of being compressed when submitted to a pressure, and when the pressure is relaxed, regains at least part of its initial size, whether in width or thickness.

This behaviour is typical of the fiber-based materials used for thermal and/or acoustical insulation. Fiber-based layers are interesting as compressible layers, because they can be compressed in one direction without an expansion taking place in a direction transversal to the compression direction. This is because the fiber structure creates an open porosity and the fibers can be rearranged inside the product. For instance, glass wool can easily be compressed to a size reduction by a factor up to 10 in thickness, with full recovery of initial dimensions. It also is tolerant to lateral compression, and can adjust easily within a construction frame.

This ability to be compressed laterally is however hindered if the fiber layer is bonded to the stiff base board by means of an adhesive layer covering the whole contact area as shown on figure 4 reflecting prior art, which is the basis for this invention. Releasing adhesion along a certain distance, according to the present invention, restores ability of fibers to reorientate freely under lateral compression.

Rigid polyurethane and polyisocyanurate foams are particularly effective thermal insulators. Their low thermal conductivity means they can be used as thin plates for any specified insulation level and thus they can easily fit into the building cavity. The insulation performance is high even for low thicknesses. They are also characterized by good mechanical properties and excellent adhesion to other materials. Most applications are as insulating materials in construction. Polystyrene, phenolic, polyurethane and polyisocyanurate foam plates are well known to the skilled professional and are commercially available as plates of varied dimensions.

Mineral wool is particularly effective for acoustic performances (absorption and insulation), especially glass wool is preferred. For example, Isover ® glass wool can be used to produce the hybrid insulating boards according to the invention. Preferably, a glass wool of density equal or less than 50kg/m³, more preferably equal or less than 40kg/m³, and thermal conductivity equal or less than 35mW/m.K, and more preferably of equal or less than 32 mW/m.K has been used.

The ratio of organic foam material thickness to mineral wool thickness in the composite board is selected to provide the expected performances with regards to thermal and acoustics insulation. The thermal insulation performance is evaluated as the thermal transmittance U, or the thermal resistance R. For example, in Great Britain, for cavity walls, U should be equal or inferior to 0.19 W·K⁻¹·m⁻².

As well, a minimum thickness of the fiber-based layer is desirable if the product is intended to be applied against uneven surfaces, typically a thickness of at least 5 mm is preferred.

Adhesion between the organic foam base layer and the fiber-based layer, preferably the mineral wool layer, is achieved by any means known to the skilled professional capable to provide robust bonding, and notably by application of a hot melt adhesive onto the organic foam plate and lamination of the fiber-based layer, especially the mineral wool layer. Alternatively, other bonding means can be used like water based adhesives, or double sided adhesive tapes, or Hook and Loop solutions. "Bonding" and "adhering" are considered as equivalent terms in the description, as well as "bonding means" and "adhesive".

Other layers than those specifically disclosed in the detailed description can be stacked with the organic foam layer and the fiber-based layer, like for example a moisture barrier layer, a multi-foil insulation layer, and an acoustic barrier layer.

In the prior art methods for insulating a cavity wall, the compressible layer is on the inner wall, or leaf, which is the leading leaf (i.e. the one which is first built). The compressible layer allows for unevenness of this leaf.

According to the invention, the board can be located according to the same arrangement as in the prior art. According to another mode of using the insulating boards of the invention, the compressible layer can be arranged facing towards the outer side of the cavity wall. This can be for providing two benefits:
- To provide a moisture management layer on the outer side of the product, where it is needed.
- To provide a compressible layer on the outer leaf. Such an arrangement provides:
   - a gap for the builders when handling the outer leaf brick or block and get their fingers behind and results in an improved ease of handling.
   - some flexibility in the positioning of the outer leaf to give good alignment - this is the external finish and so is very important.

### Figures:

Figure 1a: schematic representation of an organic foam plate and the application of a hot melt adhesive on one of its faces
Figure 1b: schematic representation of an organic foam plate including a gluing pattern on one of its faces
Figure 2a: schematically illustrates a cross-section of an example of an insulating board according to the invention
Figure 2b: schematically illustrates in perspective an example of an insulating board according to figure 2a
Figure 2c and 2d illustrate another example of an insulating board according to the invention, respectively in cross-section and perspective view.
Figure 3 schematically illustrates an example of two insulating boards according to the invention
Figure 4a: schematically illustrates an example of two insulating boards according to the prior art
Figure 4b: schematically illustrates an example of two insulating boards according to the prior art
Figure 5a and 5b schematically illustrate an example of an assembly of three insulating boards according to the invention
Figure 5c schematically illustrates a comparative example of an assembly for test purposes.

Identical objects are represented by identical references on the different figures.

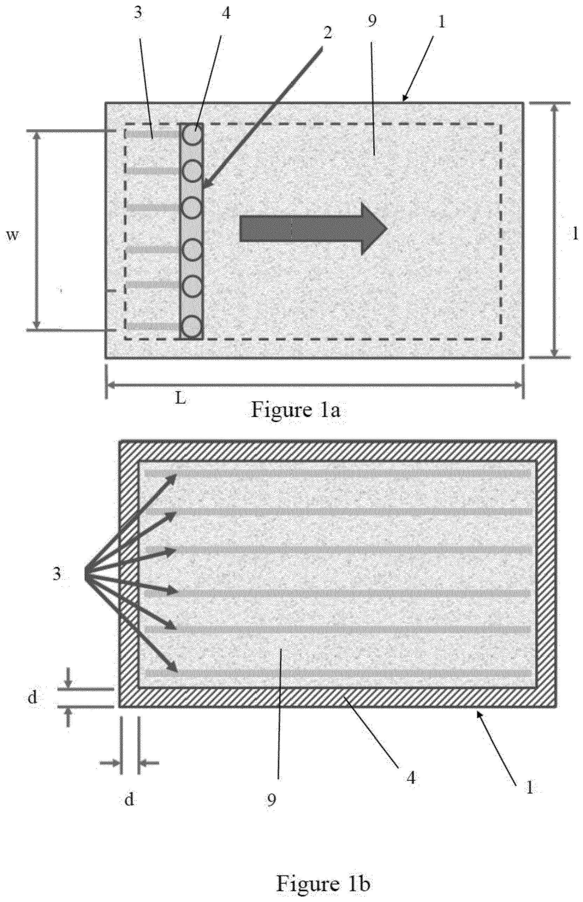

Figure 1a is a plane view of an organic foam plate 1 of length L = 1200mm and width *l* = 450 mm, while in the process of application of a hot melt adhesive 3 on the superior face 9 of the plate, through the dies 4 of a hot melt applicator 2. The central arrow indicates the progression of the hot melt applicator. The invention is applicable to insulating plates of any dimension. As represented on figure 1b, the patterning scheme is non continuous and consists of parallel lines or tracks 3 on face 9. Alternatively, the adhesive pattern could consist of spirals, or any other pattern, including a random pattern. The adhesive preferably is a ethylene/vinyl acetate copolymer based hot melt adhesive.
Adhesive application is limited to the central part of the plate of width w, and leaves a margin 4 on face 9, all around the board edges, said margin 4 being free of adhesive 3. The margin 4 is characterized by a width d = 15 mm. The margin can be from 10 to 100 mm. The margin width is constant all around the plate edges, but in the case of another gluing pattern, it could be less regular. The invention solely requests that a minimum margin be respected at least along one of the four edges, preferably along at least two adjacent edges (one length L and one width *l*), and even more preferably all around the plate edges.

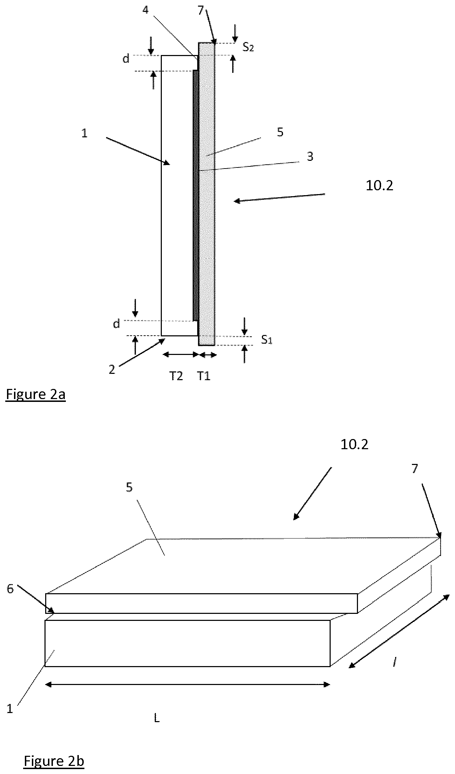

Figure 2a is a cross-section view of an insulating board 10.2 consisting of an assembly of a stiff base layer 1 of a polyisocyanurate foam material and a layer 5 of a glass wool bonded to the stiff base layer 1 through a bonding layer 3 consisting of a hot melt adhesive. The thickness of the adhesive layer is exaggerated to show clearly the margin 4 with its width d.

Figure 2b illustrates the same insulating board 10 in perspective view. The insulating board 10.2 has been obtained by laminating a layer of glass wool 5 on a face (9 on figures 1a, 1b) of an organic foam plate 1 coated on part of its face 9 with the adhesive layer 3.

The stiff base layer 1 and the layer 5 present approximately the same dimension. They have been superimposed with a shift S₁, S₂, along their length L which in this case formed a protrusion beyond the edge of the foam plate. A shift has also been applied along their width *l*, so that the face of the stiff base layer 1 which is glued to the glass wool layer 5 presents on one of its sides an edge area 6 which is not covered by the mineral wool material. The glass wool layer 5 presents on three of its sides an edge 7 that exceeds the limits of the stiff base layer 1.

The shifts S₁ and S₂ may be different. The shifts S₁ and S₂ are preferably of dimension inferior or equal to the width d of the margin 4. The same applies to the shifts practiced in the width direction.

Product 10.2 is produced using a guide which correctly positions the fibre layer 5 onto the organic foam base 1 once the adhesive 3 has been applied.

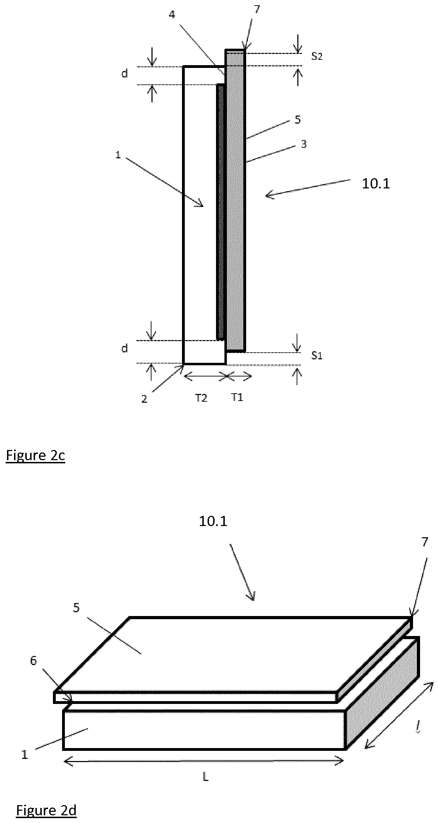

Figure 2c and 2d show a similar insulating board 10.1 wherein the fibre layer 5 is simply placed offset onto the stiff base layer 5. The shift S₁, S₂ along the length L produces a protruding edge on one side and a recess on the opposite side, and a corresponding shift is applied along the width *l*, so as to produce a protruding edge at one side and a recess at the opposite side. Such staggered arrangement is suited to create ship lap type assembly of the insulating boards.

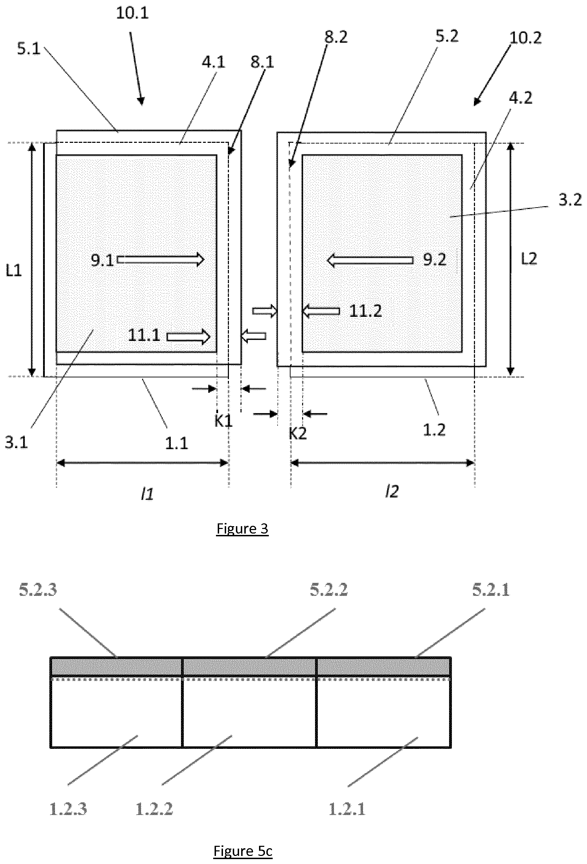

The product 10.1 is also produced using a guide which correctly positions the fibre layer 5 onto the organic foam base 1 once the adhesive 3 has been applied. On figure 3 are illustrated as plane view the two boards 10.1 and 10.2, each board comprising a stiff base layer 1.1, respectively 1.2, of a polyisocyanurate foam material placed under a compressible layer, respectively 5.1 and 5.2 of a glass wool material. The dot lines indicate the limits of the stiff base layers 1.1 and 1.2 which are placed under the compressible layers 5.1 and 5.2. The adhesive covers a surface 3.1, respectively 3.2 of one face of the base layers 1.1 and 1.2, leaving a margin 4.1, respectively 4.2, free of adhesive 3.1, respectively 3.2. Layers 1.1 and 5.1 have been stacked with a shift along the length L1 and along the width *l*1 resulting in two adjacent edges of the fiber-based layer extending beyond the corresponding edge of the base board and two adjacent edges of the fiber-based layer being inside the perimeter of the base board. Layer 5.2 has been stacked on layer 1.2 and exceeds layer 1.2 on both sides along its width *l*2, while it is shifted along its length L2 resulting in one edge of the fiber-based layer being inside the perimeter of the base board. When side edges 8.1 and 8.2 of the stiff layers 1.1 and 1.2 are brought in contact (displacement represented by white arrows 9.1, 9.2), the layers 5.1 and 5.2 can compress along a width K1, respectively K2, including the margins 4.1 and 4.2 wherein no adhesive is present, said compression being represented by arrows 11.1 and 11.2. This capacity of compression permits to bring the lateral sides 8.1 and 8.2 of the stiff plates 1.1, respectively 1.2 in close contact and it makes insulation optimal.

On figure 4a are illustrated as cross-section view two boards 12.1 and 12.2 of the prior art, each board comprising a stiff base layer 13.1, respectively 13.2, of a polyisocyanurate foam material placed under an fiber-based layer of mineral wool, respectively 15.1 and 15.2. The fiber-based layers widths 15.1 and 15.2 exceed the dimension of the stiff base layers 13.1, 13.2. The fiber-based layers 15.1 and 15.2 are bonded to the stiff base layers 13.1, 13.2 through an adhesive layer (represented with a dotted line) covering all the surface of the stiff base layers 13.1, 13.2. The boards 12.1 and 12.2 are juxtaposed at their edges 16.1 so that the fiber-based layers 15.1 and 15.2 are in contact. There remains a gap 17 between the stiff base layers 13.1, 13.2, resulting in poor insulation.

On figure 4b are illustrated as cross-section view two boards 12.1 and 12.2 of the prior art, each board comprising a stiff base layer 13.1, respectively 13.2, of a polyisocyanurate foam material placed under an fiber-based layer of mineral wool, respectively 15.1 and 15.2. The widths of the fiber-based layers 15.1 and 15.2 exceed the dimension of the stiff base layers 13.1, 13.2 (as the boards shown in figure 4a). The fiber-based layers 15.1 and 15.2 are bonded to the stiff base layers 13.1, 13.2 through an adhesive layer (represented with a dotted line) covering all the surface of the stiff base layers 13.1, 13.2. The boards 12.1 and 12.2 are juxtaposed at their edges 16.2 so that the stiff base layers 13.1, 13.2 are in contact. At their junction 16.1, the fiber-based layer, 15.1 and 15.2 are bent under the pressure represented by arrows 18.1, 18.2, resulting in damage of the mineral wool and creation of large air pockets within the mineral wool material and outside of the board on either side of the protrusion created by the deformation. This results in less thermal performance and moisture management.

On figure 5a are illustrated as cross-section view three boards 10.2.1, 10.2.2 and 10.2.3, each board consisting of a stiff base layer 1.2.1, 1.2.2, 1.2.3, made of a polyisocyanurate foam material placed under a resiliently compressible layer, respectively 5.2.1, 5.2.2 and 5.2.3 of a glass wool material. The boards 10.2.1, 10.2.2 and 10.2.3, are obtained in the same manner as board 10.2 illustrated on figure 3 with a bonding layer represented by a dotted line not extending to the edges of the boards, i.e. with no glue at the margins. When they are assembled so that the side edges of the stiff base plates 1.2.1, 1.2.2, 1.2.3 come in contact with each other, the side edges of the resiliently compressible layer, respectively 5.2.1, 5.2.2 and 5.2.3 also come in contact and are pressed against each other. As the sides of the fiber-based layer are allowed to move in either direction in the absence of gluing along the edge area and are compressed in case they exceed the size of the stiff base plates 1.2.1, 1.2.2, or 1.2.3, a full contact between fiber-based layers is obtained with no out-of-plane deformation. Due to the shift, the interface between two adjacent glass wool layers may not lie in the same plane as the contacting edges of the stiff base plates. This arrangement provides satisfying thermal and acoustics insulation.

When one compares the board assembly of figure 4b (prior art) and figure 5a (according to the invention), the following comments can be made: The mineral wool layer of the board assembly of figure 4b is compressed at its edges. On account of its adhesion to the whole surface of the stiff base layer, it presents some damage resulting in poor thermal performance and non-satisfactory moisture management. In comparison, the board assembly of figure 5a (according to the present invention) presents neat interfaces at the junction between two boards. No protrusion is created, and an even layer of mineral wool is preserved. This results in satisfying thermal performance and moisture management.

On figure 5b are illustrated as cross-section view three boards 10.1.1, 10.1.2 and 10.1.3, each board consisting of a stiff base layer 1.1.1, 1.1.2, 1.1.3 made of a polyisocyanurate foam material placed under a resiliently compressible layer, respectively 5.1.1, 5.1.2 and 5.1.3 of a glass wool material. The boards 10.1.1, 10.1.2 and 10.1.3, are assembled so that the side edges of the stiff base plates 1.1.1, 1.1.2, 1.1.3 are in contact with each other. The boards have been obtained as shown for board 10.1 in figure 3 with a bonding layer represented by a dotted line not extending up to the edges of the boards, i.e. with no glue at the margin, and with the resiliently compressible layers, respectively 5.1.1, 5.1.2 and 5.1.3 having been stacked on the stiff base layers 1.1.1, 1.1.2, 1.1.3 in an offset relationship, with a shift represented by arrows S.1.1, S.1.2, S.1.3. The shifts S.1.1, S.1.2, S.1.3, respectively, are approximately equal on two opposed edges of a respective board. The compressibility of the fiber-based layers 5.1.1, 5.1.2 and 5.1.3 at their side edges ensures a tight contact. This arrangement provides satisfying thermal and acoustics insulation. It also provides top performance in term of moisture management.

### Examples: Results of moisture penetration

A wet wall test rig was constructed in order to observe moisture penetration through two different sample concepts.

The first rig was comparative as shown on figure 5c. It was different from that disclosed above in relationship with figure 5a in that glue was applied over the whole surface including at the edges, all over the board, so that no non adhesive-coated margin remains on any side. The side edges of the stiff base plates 1.2.1, 1.2.2, 1.2.3 of the boards are in contact with each other. The resiliently compressible layers, respectively 5.2.1, 5.2.2 and 5.2.3 of a glass wool material have very accurate edge dimensions to avoid compression at the edges when the boards are assembled. The boards consist in a butt edge laminate of mineral wool (thickness 25 mm) on polyisocyanurate foam (thickness 75 mm).

The second rig was according to figure 5b as above disclosed, it consists in an offset laminate of mineral wool (thickness 25 mm) on polyiscocyanurate foam (thickness 75 mm).The tests have been achieved according to a protocol compliant with the British Board of Agrément "functional description of testing of the water resistance of a cavity wall after installing cavity wall insulation" available on the www.bbacerts.co.uk website.

A test cavity wall is filled with insulation and then subjected continuously to both water spray and air pressure of increasing severity, over a 15-day test period.

The appearance and spread of any dampness on the 'inner leaf' is monitored and the flow of water from the 'cavity' measured. The pass/fail criterion is :
Pass - No unexplained persistent dampness visible on the indicating leaf.
Fail - Persistent visible dampness appears on the indicating leaf wall:

The cavity wall is constructed with an 'outer leaf' of bricks, and an 'inner leaf' (indicating leaf) of aircrete blocks and provided with possibility to remove blocks for observation or for the removal of the cavity fill. Wall ties (conforming to BS 1243: 1978 *Specification for metal ties for cavity wall construction*) to "tie" together the external leaf [brick] and the internal leaf [blockwork] together and lock the insulation into place within the cavity wall system in order to stop the insulation product from moving as the system is being built. Although the ties are designed to prevent moisture penetration across the cavity; however improper installation may have the opposite effect and may actually encourage water penetration. Therefore the product according to the invention was tested with and without wall ties.

As noted in the table below, the product according to the invention successfully passes the test in both configurations, whereas a butt edge laminate product fails in both cases.

| **Sample tested** | **Moisture penetration observed without wall ties** | **Moisture penetration observed with wall ties** | **Sample pass/fail moisture analysis** |
|---|---|---|---|
| COMPARATIVE Butt edge laminate on PIR **(****figure 5c****)** | **YES** | **YES** | **Fail** |
| Offset mineral wool on PIR **(****figure 5b****)** | **NO** | **NO** | **Pass** |

## Claims

1. An insulating board (10, 10.1, 10.2, 10.3) comprising a stack of layers including:
- an organic foam base layer (1, 1.1, 1.2, 1.3), and
- a fiber-based layer (5, 5.1, 5.2, 5.3) in contact with the organic foam base layer (1, 1.1, 1.2, 1.3), thereby defining a contact area, and bonded to the organic foam base layer by means of an adhesive layer (3,3.1,3.2) coated on one face (9) of the organic foam base layer (1, 1.1, 1.2, 1.3) in said contact area,
**characterized in that** the contact area comprises an adhesive-free margin (4, 4.1, 4.2) of at least 10 mm width (d) along at least one of its edges.

2. The insulating board (10, 10.1, 10.2, 10.3) according to claim 1, wherein the organic foam of the organic foam base layer is selected from polystyrene foam, phenolic foam, polyisocyanurate foam and polyurethane foam, preferably polyisocyanurate foam.

3. The insulating board (10, 10.1, 10.2, 10.3) according to claim 1 or claim 2, wherein the fiber-based layer is a mineral wool layer or a wood fiber layer.

4. The insulating board (10, 10.1, 10.2, 10.3) according to claim 3, wherein the mineral wool is stone wool or glass wool, preferably glass wool.

5. The insulating board (10, 10.1, 10.2, 10.3) according to any of the preceding claims, wherein the fiber-based layer is of density equal or less than 50kg/m³, more preferably equal or less than 40kg/m³.

6. The insulating board (10, 10.1, 10.2, 10.3) according to any of the preceding claims, wherein the fiber-based layer, preferably the mineral wool layer, is of thermal conductivity equal or less than 35 mW/m.K, and more preferably equal or less than 32 mW/m.K.

7. The insulating board (10, 10.1, 10.2, 10.3) according to any of the preceding claims, wherein the ratio of the thickness (T1) of the organic foam base layer (1, 1.1, 1.2, 1.3) to the thickness (T2) of the fiber-based layer (5, 5.1, 5.2, 5.3), preferably the mineral wool layer, T1/T2 is from 50/50 to 90/10.

8. The insulating board (10, 10.1, 10.2, 10.3) according to any of the preceding claims, wherein the adhesive-free margin of the contact area (4, 4.1, 4.2) is located along at least two consecutive edges of the organic foam base layer (1, 1.1, 1.2, 1.3).

9. The insulating board (10, 10.1, 10.2, 10.3) according to any of the preceding claims, wherein the adhesive-free margin (4, 4.1, 4.2) of the contact area is of at least 15 mm width (d).

10. The insulating board (10, 10.1, 10.2, 10.3) according to any of the preceding claims, wherein the adhesive layer (3, 3.1, 3.2) is non-continuous, and preferably comprises parallel bands of adhesive or spiral shaped patterns of adhesive.

11. The insulating board (10, 10.1, 10.2, 10.3) according to any of claims 1 - 9, wherein the adhesive layer is continuous.

12. The insulating board (10, 10.1, 10.2, 10.3) according to any of the preceding claims, wherein the adhesive layer (3, 3.1, 3.2) consists of a hot melt adhesive layer.

13. The insulating board (10, 10.1, 10.2, 10.3) according to any of the preceding claims, wherein the organic foam base layer and the fiber-based layer are stacked with a shift (S1, S2, S3) along their length (L, L1, L2) and/or along their width (*l, l*1, *l*2).

14. The insulating board (10, 10.1, 10.2, 10.3) according to any of the preceding claims, wherein the thickness (T1) of the organic foam base layer (1, 1.1, 1.2, 1.3) is from 10 to 200 mm and the thickness (T2) of the fiber-based layer (5, 5.1, 5.2, 5.3), preferably the mineral wool layer, is from 10 to 100 mm.

15. A method for insulating a wall, preferably a cavity wall, wherein said method comprises application and attachment of an insulating board (10, 10.1, 10.2, 10.3) according to any of the preceding claims to that wall.

## Patentansprüche

1. Isolierplatte (10, 10.1, 10.2, 10.3), umfassend einen Stapel von Schichten, umfassend:
- eine organische Schaumstoff-Basisschicht (1, 1.1, 1.2, 1.3) und
- eine faserbasierte Schicht (5, 5.1, 5.2, 5.3), die in Kontakt mit der organischen Schaumstoff-Basisschicht (1, 1.1, 1.2, 1.3) steht, wodurch ein Kontaktbereich definiert wird und die mittels einer Klebstoffschicht (3, 3.1, 3.2), die auf einer Seite (9) der organischen Schaumstoff-Basisschicht (1, 1.1, 1.2, 1.3) innerhalb des Kontaktbereichs aufgebracht ist, mit der organischen Schaumstoff-Basisschicht verbunden ist,
**dadurch gekennzeichnet, dass**
der Kontaktbereich einen klebstofffreien Rand (4, 4.1, 4.2) von mindestens 10 mm Breite (d) entlang mindestens einer seiner Kanten aufweist.

2. Isolierplatte (10, 10.1, 10.2, 10.3) nach Anspruch 1, wobei der organische Schaumstoff der organischen Schaumstoff-Basisschicht aus Polystyrol-Schaum, PhenolSchaum, Polyisocyanurat-Schaum und Polyurethan-Schaum, vorzugsweise Polyisocyanurat-Schaum, ausgewählt ist.

3. Isolierplatte (10, 10.1, 10.2, 10.3) nach Anspruch 1 oder Anspruch 2, wobei die faserbasierte Schicht eine Mineralwollschicht oder eine Holzfaserschicht ist.

4. Isolierplatte (10, 10.1, 10.2, 10.3) nach Anspruch 3, wobei die Mineralwolle Steinwolle oder Glaswolle, vorzugsweise Glaswolle, ist.

5. Isolierplatte (10, 10.1, 10.2, 10.3) nach einem der vorhergehenden Ansprüche, wobei die faserbasierte Schicht eine Dichte von gleich oder weniger als 50 kg/m³, insbesondere gleich oder weniger als 40 kg/m³ aufweist.

6. Isolierplatte (10, 10.1, 10.2, 10.3) nach einem der vorhergehenden Ansprüche, wobei die faserbasierte Schicht, vorzugsweise die Mineralwollschicht, eine Wärmeleitfähigkeit von gleich oder weniger als 35 mW/mK und insbesondere gleich oder weniger als 32 mW/mK aufweist.

7. Isolierplatte (10, 10.1, 10.2, 10.3) nach einem der vorhergehenden Ansprüche, wobei das Verhältnis T1:T2 der Dicke (T1) der organischen Schaumstoff-Basisschicht (1, 1.1, 1.2, 1.3) zur Dicke (T2) der faserbasierten Schicht (5, 5.1, 5.2, 5.3), vorzugsweise der Mineralwollschicht, 50:50 bis 90:10 beträgt.

8. Isolierplatte (10, 10.1, 10.2, 10.3) nach einem der vorhergehenden Ansprüche, wobei der klebstofffreie Rand des Kontaktbereichs (4, 4.1, 4.2) entlang mindestens zweier aufeinanderfolgender Kanten der organischen Schaumstoff-Basisschicht angeordnet ist (1, 1.1, 1.2, 1.3).

9. Isolierplatte (10, 10.1, 10.2, 10.3) nach einem der vorhergehenden Ansprüche, wobei der klebstofffreie Rand (4, 4.1, 4.2) des Kontaktbereichs mindestens 15 mm breit (d) ist.

10. Isolierplatte (10, 10.1, 10.2, 10.3) nach einem der vorhergehenden Ansprüche, wobei die Klebstoffschicht (3, 3.1, 3.2) nicht durchgehend ist und vorzugsweise parallele Streifen aus Klebstoff oder spiralförmige Klebstoffmuster umfasst.

11. Isolierplatte (10, 10.1, 10.2, 10.3) nach einem der Ansprüche 1 bis 9, wobei die Klebstoffschicht durchgehend ist.

12. Isolierplatte (10, 10.1, 10.2, 10.3) nach einem der vorhergehenden Ansprüche, wobei die Klebstoffschicht (3, 3.1, 3.2) aus einer Heißschmelzklebstoffschicht besteht.

13. Isolierplatte (10, 10.1, 10.2, 10.3) nach einem der vorhergehenden Ansprüche, wobei die organische Schaumstoff-Basisschicht und die faserbasierte Schicht mit einer Verschiebung (S1, S2, S3) entlang ihrer Länge (L, L1, L2) und/oder entlang ihrer Breite (*l*, *l*1, *l*2) übereinanderliegen.

14. Isolierplatte (10, 10.1, 10.2, 10.3) nach einem der vorhergehenden Ansprüche, wobei die Dicke (T1) der organischen Schaumstoff-Basisschicht (1, 1.1, 1.2, 1.3) 10 bis 200 mm und die Dicke (T2) der faserbasierten Schicht (5, 5.1, 5.2, 5.3), vorzugsweise der Mineralwollschicht, 10 bis 100 mm beträgt.

15. Verfahren zum Isolieren einer Wand, vorzugsweise einer Hohlwand, wobei das Verfahren das Aufbringen und Befestigen einer Isolierplatte (10, 10.1, 10.2, 10.3) nach einem der vorhergehenden Ansprüche an dieser Wand umfasst.

## Revendications

1. Plaque isolante (10, 10.1, 10.2, 10.3) comprenant un empilement de couches contenant :
- une couche de base en mousse organique (1, 1.1, 1.2, 1.3) et
- une couche à base de fibres (5, 5.1, 5.2, 5.3) en contact avec la couche de base en mousse organique (1, 1.1, 1.2, 1.3) de manière à définir une zone de contact, et liée à la couche de base en mousse organique au moyen d'une couche adhésive (3, 3.1, 3.2) appliquée sur une face (9) de de la couche de base en mousse organique (1, 1.1, 1.2, 1.3) dans ladite zone de contact,
**caractérisée en ce que** la zone de contact comprend le long d'un de ses bords une marge (4, 4.1, 4.2) dépourvue d'adhésif ayant une largeur (d) d'au moins 10 mm.

2. Plaque isolante (10, 10.1, 10.2, 10.3) selon la revendication 1, dans laquelle la mousse organique de la couche de base en mousse organique est choisie parmi les mousses polystyrène, les mousses phénoliques, les mousses polyisocyanurate et les mousses polyuréthanne, de préférence les mousses polyisocyanurate.

3. Plaque isolante (10, 10.1, 10.2, 10.3) selon la revendication 1 ou la revendication 2, dans laquelle la couche à base de fibres est une couche en laine minérale ou une couche en fibres de bois.

4. Plaque isolante (10, 10.1, 10.2, 10.3) selon la revendication 3, dans laquelle la laine minérale est de la laine de roche ou de la laine de verre, de préférence de la laine de verre.

5. Plaque isolante (10, 10.1, 10.2, 10.3) selon l'une quelconque des revendications précédentes, dans laquelle la couche à base de fibres présente une masse volumique inférieure ou égale à 50 kg/m³, de préférence inférieure ou égale à 40 kg/m³.

6. Plaque isolante (10, 10.1, 10.2, 10.3) selon l'une quelconque des revendications précédentes, dans laquelle la couche à base de fibres, de préférence la couche en laine minérale, présente une conductivité thermique inférieure ou égale à 35 mW/m.K, de préférence inférieure ou égale à 32 mW/m.K.

7. Plaque isolante (10, 10.1, 10.2, 10.3) selon l'une quelconque des revendications précédentes, dans laquelle le rapport T1/T2 de l'épaisseur (T1) de la couche de base en mousse organique (1, 1.1, 1.2, 1.3) à l'épaisseur (T2) de la couche à base de fibres (5, 5.1, 5.2, 5.3), de préférence de la couche de laine minérale, va de 50/50 à 90/10.

8. Plaque isolante (10, 10.1, 10.2, 10.3) selon l'une quelconque des revendications précédentes, dans laquelle la marge dépourvue d'adhésif de la zone de contact (4, 4.1, 4.2) est située le long d'au moins deux bords consécutifs de la couche de base en mousse organique (1, 1.1, 1.2, 1.3).

9. Plaque isolante (10, 10.1, 10.2, 10.3) selon l'une quelconque des revendications précédentes, dans laquelle la marge (4, 4.1, 4.2) dépourvue d'adhésif de la zone de contact a une largeur (d) d'au moins 15 mm.

10. Plaque isolante (10, 10.1, 10.2, 10.3) selon l'une quelconque des revendications précédentes, dans laquelle la couche adhésive (3, 3.1, 3.2) est une couche discontinue, et comprend de préférence des bandes parallèles d'adhésif ou un motif spiralé d'adhésif.

11. Plaque isolante (10, 10.1, 10.2, 10.3) selon l'une des revendications 1 - 9, dans lequel la couche adhésive est continue.

12. Plaque isolante (10, 10.1, 10.2, 10.3) selon l'une quelconque des revendications précédentes, dans laquelle la couche adhésive (3, 3.1, 3.2) est constituée d'une couche d'adhésif thermofusible.

13. Plaque isolante (10, 10.1, 10.2, 10.3) selon l'une quelconque des revendications précédentes, dans laquelle la couche de base en mousse organique et la couche à base de fibres sont superposées avec un décalage (S1, S2, S3) le long de leur longueur (L, L1, L2) et/ou de leur largeur (*l*, *l*1, *l*2).

14. Plaque isolante (10, 10.1, 10.2, 10.3) selon l'une quelconque des revendications précédentes, dans laquelle l'épaisseur (T1) de la couche de base en mousse organique (1, 1.1, 1.2, 1.3) est comprise entre 10 et 200 mm et l'épaisseur (T2) de la couche à base de fibres (5, 5.1, 5.2, 5.3), de préférence de la couche de laine minérale, est compris entre 10 et 100 nm.

15. Un procédé pour isoler une paroi, de préférence une paroi comportant une cavité, ledit procédé comprenant l'application et la fixation à ladite paroi d'une plaque isolante (10, 10.1, 10.2, 10.3) selon l'une quelconque des revendications précédentes.
